# EUROPEAN PATENT SPECIFICATION

(11) **EP 1 673 984 B1**
(45) Date of publication and mention of the grant of the patent: **16.11.2011**
(21) Application number: 03748562.0
(22) Date of filing: 24.09.2003
(51) Int. Cl.: A23L 1/16

(54) **PROCESS FOR PRODUCING WRAPPED FOOD HAVING NON-FRIED DRY FILLINGS**
VERFAHREN ZUR HERSTELLUNG VON UMHÜLLTEN NAHRUNGSMITTELN MIT TROCKENER, NICHT FRITTIERTER FÜLLUNG
PROCEDE DE PRODUCTION D'UNE DENREE ALIMENTAIRE EMBALLE RENFERMANT UNE GARNITURE SECHEE NON FRITE

(43) Date of publication of application: 28.06.2006
(73) Proprietor: MYOJO FOODS CO., LTD., Shibuya-ku Tokyo 151-8507 (JP)
(72) Inventor: TANIKAWA, Hiroto, Tokorozawa-shi, Saitama 359-1106 (JP); KOBAYASHI, Mitsuharu, Sakado-shi, Saitama 350-0227 (JP); MIYAMOTO, Shinichiro, Setagaya-ku, Tokyo 157-0064 (JP)
(74) Representative: Strehl Schübel-Hopf & Partner
(86) International application number: PCT/JP2003/012132
(87) International publication number: WO 2005/029976

(56) References cited:
- GB-A- 2 276 306
- JP-A- 3 224 456
- JP-A- 10 108 638
- JP-A- 10 191 913
- JP-A- 11 009 209
- JP-A- 53 127 843
- US-A- 4 230 735
- US-A- 4 370 352
- US-A- 4 596 714

## Description

### Technical Field

This invention relates to filled snacks and a process for making them. More specifically, the invention relates to instant filled snacks as dried with hot air rather than by oil frying, as well as a process for making such filled snacks.

### Background of the Invention

In order to make *jiazi, siu mai,* spring rolls and *won tons* and other filled snacks, sodium chloride, water and other ingredients are added to wheat flour, kneaded and rolled into a wrapping of dough, with which the filling is enclosed. While those filled snacks are commonly eaten at restaurants and homes, some of them are commercially supplied as "instant filled snacks" that become ready to eat by simply pouring in boiling water or cooking them in boiling water for a short period of time.

The conventional commercially available instant filled snacks are manufactured through drying by oil frying. In this drying method, a filled snack is fried in oil as hot as 130-150 °C, so the wrapping of dough is dehydrated so quickly that defects often occur in the form of "blisters". In order to prevent this "blistering", several means are taken, as exemplified by changing the composition of the wheat flour mixture or the frying temperature. These methods are effective to some extent in preventing "blistering". However, the process of oil frying is not immune to its own problems; the wrapping of dough absorbs an increased amount of oil, which oxidatively deteriorates over time, doing harm to the palatability and flavor of the snack and, occasionally causing adverse effects on the flavor of the soup after rehydration with boiling water.

With a view to solving those problems accompanying the oil frying process, JP 56-24506 B proposed a method of making instant filled snacks through drying with hot air rather than by oil frying. However, the instant filled snack made through drying with hot air has lower content of α-starch than the one made through drying by oil frying, so prior to the drying step, the wrapper must be steamed until it has a satisfactory α-starch content. According to JP 56-24506 B, supra, the wheat flour mixture is kneaded and rolled into dough sheets which are cut to appropriate size and then steamed. This is probably because steamed dough sheets are difficult to cut and the loss of dough sheets should be avoided as much as possible when obtaining the desired shape and size. However, if a sequence of operations are performed by the method, the sections into which the dough sheets have been cut take much labor and time to assemble, align and transport; as a further problem, the steamed sections stick to each other, causing by no means negligible loss. In addition, steaming often fails to be uniform between cut sections, potentially impairing the palatability of the snack. There is yet another problem. After enclosing the filling with a steamed section, you may attempt to press the opposite edges of the section together to form a seal; in fact, however, the edges will not secure firmly and the filling may occasionally leak out of the incompletely sealed opening.

An object, therefore, of the present invention is to provide a process for making non-oil-fried, filled snacks that keep longer, are palatable, attractive, and assure good shape retention, thereby presenting high commercial value.

### Summary of the Invention

The stated object can be attained by the process of the invention for making filled snacks dried by non-oil-frying, as defined in the appended claims.

According to its first embodiment, the process of the invention comprises the steps of:
(a) kneading a wheat flour mixture to prepare dough;
(b) rolling said dough to prepare a dough sheet;
(c) steaming said rolled dough sheet;
(d) cutting a plurality of sections of a specified size and a specified shape from said steamed dough sheet;
(e) placing a dried filling on each of said sections;
(f) joining the opposite edges of each of said sections so that said filling is enclosed in said section to prepare a wrapped dumpling; and
(g) drying said wrapped dumpling by means other than oil frying.

According to its second embodiment, the process of the invention comprises the steps of:
(a) kneading a wheat flour mixture to prepare dough;
(b) rolling said dough to prepare a dough sheet;
(c) steaming said rolled dough sheet and cutting a plurality of sections of a specified size and a specified shape from said steamed dough sheet, or alternatively, cutting a plurality of sections of a specified size and a specified shape from said rolled dough sheet and steaming each section;
(d) placing a dried filling on each of said sections;
(e) thermally compressing the opposite edges of each of said sections together so that they are joined and said filling is enclosed in said section to prepare a wrapped dumpling; and
(f) drying said wrapped dumpling by means other than oil frying.

According to its third embodiment, the process of the invention comprises the steps of:
(a) kneading a wheat flour mixture to prepare dough;
(b) rolling said dough to prepare a dough sheet;
(c) steaming said rolled dough sheet;
(d) cooling said steamed dough sheet;
(e) applying a powder to the surface of transport means for transporting said cooled dough sheet;
(f) slitting the dough sheet, as it has been transported by said transport means, into specified widths to prepare a plurality of dough strips of narrower width;
(g) cutting a plurality of sections of a specified size and a specified shape from said plurality of dough strips of narrower width;
(h) placing a dried filling on each of said sections;
(i) joining the opposite edges of each of said sections so that said filling is enclosed in said section to prepare a wrapped dumpling; and
(j) drying said wrapped dumpling by means other than oil frying.

### Best Mode for Carrying Out the Invention

The wheat flour mixture to be used in the respective embodiments of the invention is a mixture based on wheat flour. Other ingredients that can be added to wheat flour include, for example, starches other than wheat such as rice, potato, sweet potato, onion, kudzu vine (Pueraria thunbergiana) and tapioca, processed starches thereof, whole egg powder and active gluten. One or more of those auxiliary ingredients may be chosen as appropriate and employed together with wheat flour. In the wheat flour mixture, wheat flour preferably accounts for 30 - 100 wt%, and the auxiliary ingredients 0 - 70 wt%, of the total weight of the mixture.
If the proportion of the wheat flour is less than 30 wt%, efficient rolling operation is not possible on account of poor dough consistency.

If necessary, sodium chloride, seasonings, fats or oils, sugars, sugar alcohols, coloring agents, enzymes, emulsifiers, antioxidants, quality modifiers and other well-known additives may be incorporated as appropriate into the wheat flour mixture. These additives may be mixed directly into the stock flour or they may be added as dissolved in the water to be added in the kneading step.

A suitable amount of water or 10 - 60 wt% of kansui is added to the wheat flour mixture, which is then kneaded with a conventional atmospheric or vacuum mixer for a specified period of time. *Kansui* is an aqueous solution containing one or more salts selected from the group consisting of potassium and sodium carbonates and phosphates.

In the next step, the dough is passed through rolls several times (say, rolled through six stages) to make a sheet. The dough sheet may be a single sheet from scratch but alternatively, two sheets may be combined to make one composite sheet. In either case, the final thickness of the as-rolled sheet is preferably in the range from about 0.3 mm to about 2 mm. If the final thickness of the sheet is less than about 0.3 mm, it is so thin as to break easily and the efficiency of the subsequent operations will decrease. On the other hand, if the final thickness of the sheet is greater than about 2 mm, the dough sheet is unduly thick, not only causing adverse effects on the conversion to α-starch in the subsequent steaming step but also impairing the palatability of the final snack product.

In the method according to each embodiment of the present invention, the dough sheet is steamed to effect conversion to α-starch. Steaming itself is not an essential requirement of the invention. Generally, conversion to α-starch can be accomplished using any conventional steamer. For example, water vapor having a pressure of 0.5 - 1.5 kg/cm² and a temperature of about 110 °C may be supplied in an amount of 100 kg/hr for a period of about 1 - 2 minutes until the dough sheet is converted to α-starch by about 95 - 98%.

In the methods according to the first and second embodiments of the invention, at least one surface of the steamed dough sheet is air-cooled and dried. The dough sheet is preferably air-cooled and dried on the surface on the side which is to contact the molding machine. Without this preliminary air-cooling and drying step, the cutter will stick to the dough sheet and the efficiency of the subsequent operations will drop considerably. The preliminary air-cooling and drying step will ensure that even the as-steamed dough sheet which is still sticky can be efficiently cut into sections that eventually serve as wrappers and, in addition, the molding step at a later stage can be easily performed. For efficient cutting operation, the steamed dough sheet is preferably cooled to 30 °C or below. The temperature of the cooling air is preferably not higher than room temperature or the ambient temperature. It is generally preferred that the velocity of the cooling air is within the range of 1 - 10 m/sec. The cooling air may be blown for a period ranging from several to 30 seconds. An optimum combination of the temperature, velocity and blow time of the cooling air can be determined as appropriate considering its effect on lowering the temperature of the dough sheet and the degree by which the surface of the dough sheet is dried.

In the methods according to the first and second embodiments of the invention, the steamed dough sheet, after it is preliminarily air-cooled and dried, is cut into wrapping sections of a specified size and shape. The wrapping sections may be of any shapes such as being rectangular, square, circular, triangular, polygonal (e.g. pentagonal and having more sides), elliptical and star-shaped: The cutting method may be by punching out the dough sheet with a mold having a specified shape or by cutting it with a blade. In order to minimize the cutting loss, rectangular, square or triangular shapes are preferred. The size of the sections can be determined as appropriate in consideration of the filling to be wrapped with the sections. If the sections are of a square shape, they are preferably of a 7 cm x 7 cm size. Sections of other sizes may of course be employed.

In the methods according to the first and second embodiments of the invention, efficient operations can be realized if the width of the dough sheet is generally the same as the width of the wrapping sections (for instance, both are 7 cm wide). However, if the methods according to the first and second embodiments of the invention are applied to broad dough sheets (say, having a width of 42 cm), they cannot be slit to strips of a narrower width (say, 7 cm) without entangling, getting stuck or bending in the slitter, thus lowering the operating efficiency. This is not the case with the third embodiment of the invention and filled snacks can be mass produced efficiently without involving any of the problems mentioned above.

In the method according to the third embodiment of the invention, the as-steamed broad dough sheet is cooled, preferably in such a way that its surface temperature is about 15°C. This cooling step is preferably performed by passing the steamed dough sheet through a cold zone. The cold zone may typically be of a tunnel shape having a specified transport distance the interior of which has been cooled by means of a cooler to a temperature between about +15 °C and -20 °C. The method according to the third embodiment of the invention differs from the methods according to the first and second embodiments in that the temperature of the dough sheet is lowered not by using cooling air but by simply passing the dough sheet through the cold zone. If the temperature of the dough sheet is lowered not by using cooling air but by passing the dough sheet through the cold zone, there will be no warpage of the dough sheet and two advantages result, one being the occurrence of less trouble in the subsequent operations and the other being a marked improvement in the efficiency of the slitting operation. As a further advantage, each of the cut sections maintains a wet surface, so after being folded over, the opposite edges can be pressed together to provide a firm seal.

In the method according to the third embodiment of the invention, the cooled broad dough sheet is slit into a plurality of strips of a narrower width (say, 7 cm). A transport means (e.g. a feed conveyor) by which the cooled dough sheet emerging from the exit of the cold zone is transported to the slitter is dusted with a powder on the surface of the transport belt. This provides an effective way against sticking of the dough sheet to the surface of the transport means, thereby ensuring that there will be no drop in the efficiency of the subsequent operations. Dusting the surface of the dough sheet with a powder is not preferred since any residual powder will dissolve out of the final filled snack as it is eaten, occasionally impairing its taste. If a feed conveyor is used as the means of transporting the dough sheet, a powder is preferably applied to the upper guide as well as the surface of the conveyor belt. This contributes to improving the separability of the dough sheet from the conveyor. The powder is preferably applied in amounts ranging from 0.0014 g/cm² to 0.0222 g/cm². In other words, if the sections are sized 7 cm x 7 cm (to have an area of 49 cm²), the amount of powder dusting is preferably between 0.0686 g and 1.0878 g. If the amount of powder dusting is less than 0.0686 g/49 cm², it does not prove satisfactorily effective in improving the separability of the dough sheet from the conveyor belt. If the amount of powder dusting is greater than 1.0878 g/49 cm², the separability improving effect is saturated and only diseconomy results. In addition, the excessive powder will stick to the dough sheet and remain on its surface, eventually impairing the taste of the filled snack. It is preferred to use starches as the dusting powder. Preferred starches include, for example, potato starch, tapioca starch, corn starch and sago starch (the crosslinked starch recovered from the soft interior of the trunk of sago palm). Among these starches, sago starch is particularly preferred as the dusting powder because it does not swell upon heating but remains loose. The dusting powder can be easily applied by using a conventional duster.

In the method according to the third embodiment of the invention, wrapping sections having a specified size and shape are cut from the strips of a narrower width that have been obtained by slitting the broad dough sheet with a slitter and this operation can be achieved in generally the same way as when cutting out the wrapping sections in the methods according to the first and second embodiments of the invention. Therefore, in the method according to the third embodiment of the invention, the wrapping sections may be of any shapes such as being rectangular, square, circular, triangular, polygonal (e.g. pentagonal and having more sides), elliptical and star-shaped. The cutting method may be by punching out the dough sheet with a mold having a specified shape or by cutting it with a blade. In order to minimize the cutting loss, rectangular, square or triangular shapes are preferred. The size of the sections can be determined as appropriate in consideration of the filling to be wrapped with the sections. If the sections are of a square shape, they are preferably of a 7 cm x 7 cm size.

When the wrapping sections are obtained in each of the three embodiments of the invention, a specified amount of the filling is placed on each section. The filling to be wrapped with such sections can be prepared from any ingredients such as meats, vegetables, fish and shellfish, and fish pastes. If necessary, the filling may be seasoned with salt, sugar, spices and other well-known and conventional seasonings. The filling must be used in a dried state. From the viewpoint of keeping quality, the water content of the filling is preferably no more than about 15%, say, 10% or less.

After placing the filling on each wrapping section, the section is folded over and the opposite edges are joined together or pleats are formed along the edge so that the filling is enclosed within the section. The joined edges or the pleats are pressed together, optionally under heating, to seal them. It is generally preferred to set the heating temperature within the range of 30 - 150 °C. If the heating temperature is less than 30 °C, insufficient sealing may occur. On the other hand, if the heating temperature is higher than 150 °C, the pressed portions of the edges may scorch or fuse. The pressure to be applied in the pressing operation is preferably within the range of 0.1 - 50 kg/cm². If the pressure is less than 0.1 kg/cm², the opposite edges of the section will not be securely joined and only insufficient seal will result. If the pressure is higher than 50 kg/cm², the joined portion is ruptured and the seal will undo, letting the filling come out. The thermal compressing operation can be performed with a known conventional compression molding machine. By virtue of this thermal compression, the filled snack can, just prior to eating, be rehydrated by pouring in boiling water or immersing it in boiling water as it remains sealed for a sufficiently long period and yet there hardly occurs the inconvenience of the filling coming out of the wrapper; the filled snack has good enough appearance to increase the appetite of the customer who can enjoy its taste. None of these advantages are obtained if the wrapper is sealed by simply compressing the opposite edges without heating them.

Alternatively, a given amount of filling is placed in a specified position on one steamed dough sheet, which is overlaid with the other steamed dough sheet and the two sheets are joined together by being thermally compressed into a specified shape that wraps the filling; the dough sheet is either cut off or punched out along the joined edges to make a snack having the filling sealed inside.

In the next step, the filled snack is dried. Any known conventional drying method may be employed, as exemplified by ordinary hot air drying, ir drying, microwave drying or inflation drying. The drying operation is preferably performed slowly enough to ensure that the wrapper converted to α-starch will not undergo the "skin effect". The preferred degree of drying is such that the moisture content of the wrapper converted to α-starch is reduced to about 15% and below.

The dried snack with the filling sealed inside is then cooled to ordinary temperature and put into a package together with a separate prepackaged liquid seasoning (e.g. soup), thereby providing the final complete product.

The methods according to the first and second embodiments of the invention are performed in a single line, so their throughput is typically only about 3600 snacks per hour. However, in the method according to the third embodiment, production is performed in multiple lines, so if the broad dough sheet is 42 cm wide, the throughput is almost six times higher than in the case of making 7-cm wide dough sheets in single-line production and about 20,000 snacks can be manufactured per hour.

Various filled snacks can be produced by the methods of the invention and they include Chinese or Western snacks including *won tons, jiazi, siu mai*, spring rolls, ravioli, tortellini, lasagna, etc.

The following examples are provided for illustrating the present invention more specifically.

### Example 1

To a flour mixture (1 kg) consisting of strong wheat flour and tapioca starch (55:45), 380 ml of water having 24 g of sodium chloride, 2.4 g of an alkali anhydride and 8 g of sorbitol dissolved therein was added and mixed with an atmospheric mixer for 15 minutes. A dough sheet 0.5 mm thick and 7 cm wide was made by 6-stage rolling. No sheet compositing was effected. The dough sheet was steamed in a tunnel at 98 °C for 1 minute and 30 seconds until conversion to α-starch occurred. The steamed sheet was air-cooled and dried by blowing air from above at a flow rate of 3 m/sec. The dried sheet was cut into squares of 7.0 cm x 7.0 cm. A freeze-dried minced pork (0.8 g) was wrapped with each square, the sides of which were drawn in with a won ton molding machine having compression plates heated at 50 °C. The pressure applied was 6 kg/cm². The shaped products were inflation-dried at 116 °C at a speed of 42 m/sec and left to cool, producing 50 instant filled snacks (invention products).

### Comparative Example 1

Fifty instant filled snacks (controls) were prepared by replicating the above procedure, except that the compression plates were not heated at all.

### Comparative Example 2

The above procedure was repeated, except that no cooling and drying step was performed before the cutting operation. The cut squares were found distorted in shape and they stuck so firmly to the molding machine that it was impossible to make filled snacks.

### (1) Test to check how long snacks containing a raw filling continued to maintain their shape

In the process of producing *won tons* in Example 1 and Comparative Example 1, fifteen yet to be dried products were randomly sampled as they emerged from the molding machine, left to stand at room temperature, and the time for which the compressed portion of each shaped product maintained the joint was measured. The state of the joint was visually evaluated. As it turned out, none of the shaped products according to the invention tore open at the compressed portion even after the lapse of 30 minutes. On the other hand, each of the controls prepared in Comparative Example 1 tore open in the joined portion within one minute and the filling came out.

### (2) Test to check how long snacks containing a dried filling continued to maintain their shape

The dried *won tons* prepared in Example 1 and Comparative Example 1 were rehydrated in boiling water and the time for which they maintained their shape was measured. The testing procedure was follows: two beakers each having a capacity of 200 ml were provided; one *won ton* sample of the present invention was put into one beaker and one control sample, according to Comparative Example 1 was put into the other beaker; 100 ml of water boiling at 100 °C was poured into each beaker; when 3 minutes had passed since the boiling water was poured in, the contents of each beaker were stirred three times with chopsticks and the shape of either sample was observed visually. Thereafter, the samples were stirred once every minute by means of chopsticks, picked up with chopsticks, and visually checked for its shape. The results of observation are summarized in Table 1 below, in which "○" means that the sample maintained its shape without any abnormalcy; "△" means that the neck of the sample (where its sides had been drawn in) was about to widen; "×" means that the neck of the sample (where its sides had been drawn in) widened, letting the filling leak out. In Table 1, the asterisk (*) means that the joined portion had torn open before the drying step was completed.

**Table 1**

| | Time (minutes) passed after pouring in boiling water | | | | | | | | | | | | | | | | |
|---|---|---|---|---|---|---|---|---|---|---|---|---|---|---|---|---|---|
| | 0 | 3 | 4 | 5 | 6 | 7 | 8 | 9 | 10 | 11 | 12 | 13 | 14 | 15 | 16 | 17 | 18 |
| In-1 | | ○ | ○ | ○ | ○ | ○ | ○ | ○ | ○ | ○ | ○ | ○ | ○ | ○ | ○ | × | |
| In-2 | | ○ | ○ | ○ | ○ | ○ | ○ | ○ | △ | × | | | | | | | |
| In-3 | | ○ | ○ | ○ | ○ | ○ | ○ | ○ | ○ | ○ | ○ | ○ | △ | × | | | |
| In-4 | | ○ | ○ | ○ | ○ | ○ | ○ | ○ | ○ | ○ | ○ | △ | △ | × | | | |
| In-5 | | ○ | ○ | ○ | ○ | ○ | ○ | ○ | ○ | △ | × | | | | | | |
| In-6 | | ○ | ○ | ○ | ○ | ○ | ○ | ○ | ○ | × | | | | | | | |
| In-7 | | ○ | ○ | ○ | ○ | ○ | ○ | ○ | ○ | △ | × | | | | | | |
| Co-1 | * | × | | | | | | | | | | | | | | | |
| Co-2 | * | × | | | | | | | | | | | | | | | |
| Co-3 | | △ | △ | △ | × | | | | | | | | | | | | |
| Co-4 | | ○ | ○ | △ | △ | × | | | | | | | | | | | |
| Co-5 | | ○ | ○ | ○ | △ | × | | | | | | | | | | | |
| Co-6 | | ○ | △ | × | | | | | | | | | | | | | |
| Co-7 | | ○ | ○ | ○ | ○ | △ | × | | | | | | | | | | |

| | | | | | | | | | | | | | | | | | |
|---|---|---|---|---|---|---|---|---|---|---|---|---|---|---|---|---|---|
| Note: "In" designates an invention sample and "Co" a control. | | | | | | | | | | | | | | | | | |

### (3) Test for the keeping quality of snacks containing a dried filling

Eight samples of the invention product and an equal number of commercial instant *won tons* (as dried by oil frying) were put into cups of instant *ramen,* which were sealed with lids and reopened after 6 months of storage at room temperature. Both groups were normal and satisfactory in terms of shape, color and moisture absorption; however, the commercial instant *won tons* had become rancid, giving off such an irritating odor that they were by no means edible. On the other hand, the invention products had no malodor and tasted good.

### Example 2

To a flour mixture (10 kg) consisting of strong wheat flour and tapioca starch (55:45), 3800 ml of water having 240 g of sodium chloride, 24 g of an alkali anhydride and 80 g of sorbitol dissolved therein was added and mixed with an atmospheric mixer for 15 minutes. A dough sheet 0.48 mm thick and 42 cm wide was made by 6-stage rolling. No sheet compositing was effected. The dough sheet was steamed in a tunnel at 98 °C for 1 minute and 30 seconds until conversion to α-starch occurred. The steamed sheet was moved through a cooling tunnel (15 °C) at a speed of 0.07 m/sec so that the temperature on the surface of the sheet dropped to 15 °C. The cooled broad sheet as it was emerging from the cooling tunnel was transported to a slitter by means of a feed conveyor dusted with sago starch on the surface of the belt in an amount of 0.1372 g/49 cm². The slitter then slit the broad sheet to six narrower strips each having a width of 7 cm. Thereafter, each narrower strip was cut into squares of 7.0 cm x 7.0 cm. A freeze-dried minced pork (0.5 g) was wrapped with each square, the sides of which were drawn in with a won ton molding machine having compression plates heated at 50 °C. The pressure applied was 6 kg/cm². The shaped products were inflation-dried at 116°C for 3 minutes at a speed of 42 m/sec and left to cool, producing 300 instant filled snacks (*won tons*)*.*

### (1) Test to check how long snacks containing a raw filling continued to maintain their shape

In the process of producing *won tons* in Example 2, fifteen yet to be dried products were randomly sampled as they emerged from the molding machine, left to stand at room temperature, and the time for which the compressed portion of each shaped product maintained the joint was measured. The state of the joint was visually evaluated. As it turned out, none of the shaped products prepared in Example 2 tore open at the compressed portion even after the lapse of 30 minutes.

### (2) Test to check how long snacks containing a dried filling continued to maintain their shape

The dried *won tons* prepared in Example 2 were rehydrated in boiling water and the time for which they maintained their shape was measured. The testing procedure was follows: a beaker having a capacity of 200 ml was provided; one *won ton* sample prepared in Example 2 was put into the beaker; 100 ml of water boiling at 100°C was poured into the beaker; when 3 minutes had passed since the boiling water was poured in, the contents of the beaker were stirred three times with chopsticks and the shape of the sample was observed visually. Thereafter, the sample was stirred once every minute by means of chopsticks, picked up with chopsticks, and visually checked for its shape. The results of observation are summarized in Table 2 below, in which "○" means that the sample maintained its shape without any abnormalcy; "△" means that the neck of the sample (where its sides had been drawn in) was about to widen; "×" means that the neck of the sample (where its sides had been drawn in) widened, letting the filling leak out.

**Table 2**

| | Time (minutes) passed after pouring in boiling water | | | | | | | | | | | | | | | | |
|---|---|---|---|---|---|---|---|---|---|---|---|---|---|---|---|---|---|
| | 0 | 3 | 4 | 5 | 6 | 7 | 8 | 9 | 10 | 11 | 12 | 13 | 14 | 15 | 16 | 17 | 18 |
| Ex 2-1 | | ○ | ○ | ○ | ○ | ○ | ○ | ○ | ○ | ○ | ○ | △ | △ | × | | | |
| Ex 2-2 | | ○ | ○ | ○ | ○ | ○ | ○ | ○ | ○ | ○ | ○ | ○ | ○ | △ | △ | × | |
| Ex 2-3 | | ○ | ○ | ○ | ○ | ○ | ○ | ○ | ○ | △ | × | | | | | | |
| Ex 2-4 | | ○ | ○ | ○ | ○ | ○ | ○ | ○ | ○ | ○ | ○ | △ | × | | | | |
| Ex 2-5 | | ○ | ○ | ○ | ○ | ○ | ○ | ○ | ○ | ○ | × | | | | | | |
| Ex 2-6 | | ○ | ○ | ○ | ○ | ○ | ○ | ○ | ○ | ○ | ○ | ○ | ○ | × | | | |
| Ex 2-7 | | ○ | ○ | ○ | ○ | ○ | ○ | ○ | △ | × | | | | | | | |

| | | | | | | | | | | | | | | | | | |
|---|---|---|---|---|---|---|---|---|---|---|---|---|---|---|---|---|---|
| Note: "Ex" designates a sample in Example 2. | | | | | | | | | | | | | | | | | |

The data in Table 2 are generally the same as those for the invention products in Table 1, so one will see that according to the invention, even a production in multiple lines (as in the third embodiment of the invention) could yield products comparable to those produced in a single line (as in the first and second embodiments).

### (3) Test for the keeping quality of snacks containing a dried filling

Eight samples of the instant *won tons* produced in Example 2 were put into cups of instant *ramen*, which were sealed with lids and reopened after 6 months of storage at room temperature. The stored samples were free from any abnormalcy and all were satisfactory in terms of shape, color and moisture absorption. In addition, the stored samples were not rancid at all and they tasted good in the absence of any malodor.

### Industrial Applicability

As described on the foregoing pages, according to the present invention, wrapper sections can be cut efficiently from a dough sheet that has been steamed for conversion to α-starch. In addition, by wrapping the filling with those sections, one can produce filled snacks as dried by non-oil frying that maintain their shape and whose seal will not readily tear during cooking prior to eating. The method of the invention can be implemented by both single-line production in which only one dough sheet of narrow width is made, as well as by multiple-line production in which a broad dough sheet is slit into a plurality of strips of narrower width. By adopting the multi-line production system, filled snacks as dried by non-oil frying can be produced very efficiently.

## Claims

1. A process for making filled snacks which are dried by-non-oil-frying, comprising the steps of:
(a) kneading a wheat flour mixture to prepare a dough;
(b) rolling said dough to prepare a dough sheet;
(c) steaming said rolled dough sheet and cutting a plurality of sections of a specified size and a specified shape from said steamed dough sheet;
(d) placing a dried filling on each of said sections;
(e) joining the opposite edges of each of said sections so that said filling is enclosed in said section to prepare a wrapped dumpling; and
(f) drying said wrapped dumpling by means other than oil frying,
**characterised in that** in said step (e), the opposite edges of each of said sections are thermally compressed together so that they are joined.

2. A process for making filled snacks which are dried by non-oil-frying, comprising the steps of:
(a) kneading a wheat flour mixture to prepare a dough;
(b) rolling said dough to prepare a dough sheet;
(c) steaming said rolled dough sheet;
(d) transporting said dough sheet;
(e) slitting the dough sheet, as it has been transported, into specified widths to prepare a plurality of dough strips of narrower width;
(f) cutting a plurality of sections of a specified size and a specified shape from said plurality of dough strips of narrower width;
(g) placing a dried filling on each of said sections;
(h) joining the opposite edges of each of said sections so that said filling is enclosed in said section to prepare a wrapped dumpling; and
(i) drying said wrapped dumpling by means other than oil frying,
**characterised in that** in said step (d), a powder is applied to the surface of a conveying belt for transporting said dough sheet in an amount ranging from 0.0014 g/cm² to 0.0222 g/cm² .

3. A process according to claim 2, wherein in said step (d), the powder is potato starch, tapioca starch, corn starch and/or sago starch.

4. A process according to claim 2 or 3, wherein in said step (h), the opposite edges of each of said sections are thermally compressed together so that they are joined.

## Patentansprüche

1. Verfahren zur Herstellung gefüllter Nahrungsmittel, die durch fettfreies Braten getrocknet werden, mit folgenden Schritten:
(a) Kneten einer Weizenmehlmischung unter Zubereitung eines Teigs,
(b) Rollen des Teigs unter Zubereitung einer Teigschicht,
(c) Dämpfen der gerollten Teigschicht und Schneiden mehrerer Abschnitte bestimmter Größe und Form aus der gedämpften Teigschicht,
(d) Anordnen einer getrockneten Füllung auf den jeweiligen Abschnitten,
(e) Verbinden gegenüberliegender Kanten der jeweiligen Abschnitte, so dass die Füllung unter Zubereitung eines eingewickelten Kloßes im Abschnitt eingeschlossen wird, und
(f) Trocknen des eingewickelten Kloßes mit anderen Mitteln als Braten mit Fett,
**dadurch gekennzeichnet, dass** die gegenüberliegenden Kanten der jeweiligen Abschnitte in Schritt (e) thermisch zusammengedrückt werden, so dass sie sich verbinden.

2. Verfahren zur Herstellung gefüllter Nahrungsmittel, die durch fettfreies Braten getrocknet werden, mit folgenden Schritten:
(a) Kneten einer Weizenmehlmischung unter Zubereitung eines Teigs,
(b) Rollen des Teigs unter Zubereitung einer Teigschicht,
(c) Dämpfen der gerollten Teigschicht,
(d) Befördern der Teigschicht,
(e) Schlitzen der Teigschicht in befördertem Zustand in bestimmten Breiten unter Zubereitung mehrerer Teigstreifen schmalerer Breite,
(f) Schneiden mehrerer Abschnitte bestimmter Größe und Form aus den Teigstreifen schmalerer Breite,
(g) Anordnen einer getrockneten Füllung auf den jeweiligen Abschnitten,
(h) Verbinden gegenüberliegender Kanten der jeweiligen Abschnitte, so dass die Füllung unter Zubereitung eines eingewickelten Kloßes im Abschnitt eingeschlossen wird, und
(i) Trocknen des eingewickelten Kloßes mit anderen Mitteln als Braten mit Fett,
**dadurch gekennzeichnet, dass** in Schritt (d) auf die Oberfläche eines Förderbands zum Befördern der Teigschicht ein Pulver in einer Menge im Bereich von 0,0014 g/cm² bis 0,0222 g/cm² aufgebracht wird.

3. Verfahren nach Anspruch 2, wobei das Pulver in Schritt (d) Kartoffelstärke, Tapiokastärke, Maisstärke und/oder Sagostärke ist.

4. Verfahren nach Anspruch 2 oder 3, wobei die einander gegenüberliegenden Kanten der jeweiligen Abschnitte in Schritt (h) thermisch zusammengedrückt werden, so dass sie sich verbinden.

## Revendications

1. Procédé pour préparer des en-cas garnis qui sont séchés par friture sans huile, comprenant les étapes consistant à :
(a) malaxer un mélange de farine de blé pour préparer une pâte ;
(b) rouler ladite pâte pour préparer une feuille de pâte ;
(c) étuver ladite feuille de pâte roulée et découper une pluralité de sections ayant une taille spécifiée et une forme spécifiée dans ladite feuille de pâte étuvée ;
(d) placer une garniture séchée sur chacune desdites sections ;
(e) joindre les bords opposés de chacune desdites sections de façon que ladite garniture soit enfermée dans ladite section pour préparer un chausson enveloppé ; et
(f) sécher ledit chausson enveloppé par des moyens autres qu'une friture dans l'huile,
**caractérisé en ce que**, dans ladite étape (e)., les bords opposés de chacune desdites sections sont thermiquement comprimés ensemble de façon à être joints.

2. Procédé pour préparer des en-cas garnis qui sont séchés par friture sans huile, comprenant les étapes consistant à :
(a) malaxer un mélange de farine de blé pour préparer une pâte ;
(b) rouler ladite pâte pour préparer une feuille de pâte ;
(c) étuver ladite feuille de pâte roulée ;
(d) transporter ladite feuille de pâte ;
(e) fendre la feuille de pâte, telle qu'elle a été transportée, en largeurs spécifiées pour préparer une pluralité de bandes de pâte de largeur décroissante ;
(f) découper une pluralité de sections ayant une taille spécifiée et une forme spécifiée dans ladite pluralité de bandes de pâte de largeur décroissante ;
(g) placer une garniture séchée sur chacune desdites sections ;
(h) joindre les bords opposés de chacune desdites sections de façon que ladite garniture soit enfermée dans ladite section pour préparer un chausson enveloppé ; et
(i) sécher ledit chausson enveloppé par des moyens autres qu'une friture dans l'huile,
**caractérisé en ce que**, dans ladite étape (d), une poudre est appliquée à la surface d'une courroie de convoyage pour transporter ladite feuille de pâte en une quantité située dans la plage allant de 0,014 g/cm² à 0,0222 g/cm².

3. Procédé selon la revendication 2, dans lequel, dans ladite étape (d), la poudre est de l'amidon de pomme de terre, de l'amidon de tapioca, de l'amidon de maïs et/ou de l'amidon de sagou.

4. Procédé selon la revendication 2 ou 3, dans lequel, dans ladite étape (h), les bords opposés de chacune desdites sections sont thermiquement comprimés ensemble de façon à être joints.
